# FASCICULE DE BREVET EUROPEEN

(11) **EP 2 712 749 B1**
(45) Date de publication et mention de la délivrance du brevet: **16.05.2018**
(21) Numéro de dépôt: 13306166.3
(22) Date de dépôt: 23.08.2013
(51) Int. Cl.: B60K 6/442, B60K 6/48, B60K 6/383

(54) **Système d'entraînement en déplacement d'un véhicule de type hybride**
Bewegungsantriebssystem eines Hybridfahrzeugs
System for driving the movement of a hybrid vehicle

(30) Priorité: 26.09.2012 FR 1202555
(43) Date de publication de la demande: 02.04.2014
(73) Titulaire: IFP Energies nouvelles, 92500 Rueil-Malmaison (FR)
(72) Inventeur: Venturi, Stephane, 7100 Roiffieux (FR)

(56) Documents cités:
- EP-A1- 2 405 156
- EP-A2- 1 122 109
- EP-A2- 1 236 603
- WO-A2-99/21263

## Description

La présente invention se rapporte à un système d'entraînement en déplacement d'un véhicule de type hybride.

Comme cela est bien connu, ce type de véhicule combine, pour sa propulsion, un moteur thermique, généralement à combustion interne, et au moins une machine électrique rotative reliée à une source électrique, telle qu'un ou plusieurs accumulateurs électriques.

Cette combinaison permet d'optimiser les performances de ce véhicule, notamment en diminuant la consommation en carburant du moteur thermique, tout en préservant l'environnement par des rejets limités de polluants dans l'atmosphère. Le document WO99/21263 décrit un système d'entraînement en déplacement d'un véhicule de type hybride comprenant toutes les caractéristiques du préambule de la revendication 1. Dans l'exemple décrit dans le document FR 2 811 395, ce type de véhicule comprend un dispositif de transmission de vitesse avec une ligne primaire motrice placée sensiblement parallèlement à une ligne secondaire réceptrice qui contrôle les roues motrices de ce véhicule. La ligne primaire est constituée, d'une part, d'un arbre menant principal entraîné en rotation par le moteur thermique au travers d'un accouplement débrayable et, d'autre part, d'un arbre menant auxiliaire tubulaire entraîné en rotation par le moteur électrique et entourant l'arbre menant principal. L'arbre menant principal et l'arbre menant auxiliaire peuvent être reliés à rotation l'un avec l'autre par un crabot. Chacun de ces arbres porte, de manière fixe, deux roues dentées qui sont chacune en prise avec des roues dentées réceptrices portées par la ligne secondaire réceptrice en étant montées folles en rotation sur cette ligne. Cette ligne porte également des baladeurs à débattement alternatif qui permettent de rendre solidaire en rotation les roues dentées réceptrices avec cette ligne secondaire.

Ainsi, en fonctionnement, le véhicule est entraîné en déplacement à différentes vitesses, soit par le moteur électrique, soit par le moteur thermique ou par les deux. Ceci se réalise en agissant sur les différents accouplements (accouplement débrayable et/ou crabot et/ou baladeurs) que portent les différentes lignes pour solidariser l'arbre menant principal avec le moteur thermique et/ou cet arbre menant principal avec l'arbre menant auxiliaire et/ou une des roues dentées réceptrices avec la ligne secondaire réceptrice.

Ce dispositif de transmission bien que donnant satisfaction présente néanmoins des inconvénients non négligeables.

En effet, lorsque seul le moteur électrique est utilisé pour entraîner le véhicule, il est nécessaire de procéder à l'accouplement de la roue réceptrice avec la ligne secondaire de façon à transmettre le mouvement de rotation de ce moteur électrique à cette ligne secondaire. Ceci a pour effet de nécessiter une complication de ce dispositif pour réaliser une fonction basique.

De plus, le véhicule doit comporter une multiplicité d'actionneurs pour commander l'accouplement débrayable, le crabot et les baladeurs. Ces actionneurs augmentent le coût de réalisation du dispositif et peuvent être la source de pannes et/ou de dysfonctionnements.

En outre, ces actionneurs doivent être contrôlés par une unité de calcul, comme le calculateur que comporte habituellement le moteur, ce qui nécessite d'augmenter la capacité de ce calculateur.

Enfin, il est nécessaire, pour obtenir la vitesse souhaitée, d'accoupler ou de désaccoupler certains éléments du dispositif, comme les roues dentées réceptrices. Ceci a pour effet d'allonger le temps de passage d'une vitesse à une autre en entraînant un inconfort de conduite.

Pour remédier à ces inconvénients et comme mieux décrit dans le document FR 2 962 379, le demandeur a conçu un système d'entraînement en déplacement d'un véhicule de type hybride comprenant un dispositif de transmission de vitesse avec une ligne primaire motrice placée sensiblement parallèlement à une ligne secondaire réceptrice qui contrôle les roues motrices de ce véhicule. La ligne primaire est constituée d'un arbre menant entraîné en rotation par le moteur thermique au travers d'un accouplement débrayable. L'arbre menant porte, de manière fixe, deux roues dentées qui sont chacune en prise avec des roues dentées réceptrices portées par la ligne secondaire réceptrice en étant montées folles sur cette ligne avec l'une de ces roues portée par la ligne secondaire au travers d'un accouplement unidirectionnel.

Le demandeur a continué à perfectionner ce système d'entraînement en en permettant d'associer la simplicité d'un dispositif de transmission de vitesse et sa facilité d'utilisation à une plus grande durée d'usage du véhicule en mode d'entraînement électrique.

A cet effet, l'invention concerne un système d'entraînement en Système d'entraînement en déplacement d'un véhicule de type hybride avec un moteur thermique, notamment à combustion interne, une machine électrique reliée à un arbre d'essieu du véhicule et un dispositif de transmission comportant un arbre premier de transmission relié à l'arbre d'entraînement du moteur thermique (10) au travers d'un accouplement débrayable et portant au moins deux roues dentées premières coopérant avec au moins deux roues dentées deuxièmes portées par un arbre secondaire de transmission relié à l'arbre d'essieu, l'arbre premier de transmission étant relié à une machine électrique auxiliaire, caractérisé en ce que l'un des arbres de transmission comporte deux demi-arbres reliés entre eux par un accouplement unidirectionnel.

L'arbre secondaire de transmission peut comporter deux demi-arbres reliés entre eux par un accouplement unidirectionnel.

L'un des demi-arbres secondaires peut comporter deux parties reliées entre elles par un accouplement direct.

Avantageusement, l'accouplement direct peut comprendre un crabot.

L'accouplement direct peut comprend un moyen de commande manuel.

L'arbre d'entraînement du moteur thermique peut comporter deux demi-arbres reliés entre eux par un accouplement unidirectionnel.

L'un des demi-arbres d'entraînement peut porter le moteur électrique auxiliaire.

L'accouplement unidirectionnel peut comprendre une roue libre.

Les autres caractéristiques et avantages de l'invention vont apparaître maintenant à la lecture de la description qui va suivre, donnée à titre uniquement illustratif et non limitatif, et à laquelle sont annexées :
- la figure 1 qui est un schéma montrant un système d'entraînement en déplacement d'un véhicule de type hybride selon l'invention,
- la figure 2 qui montre une variante de ce système d'entraînement,
- la figure 3 qui illustre une autre variante du système d'entraînement de la figure 2 et
- la figure 4 qui est également une variante de la figure 1.

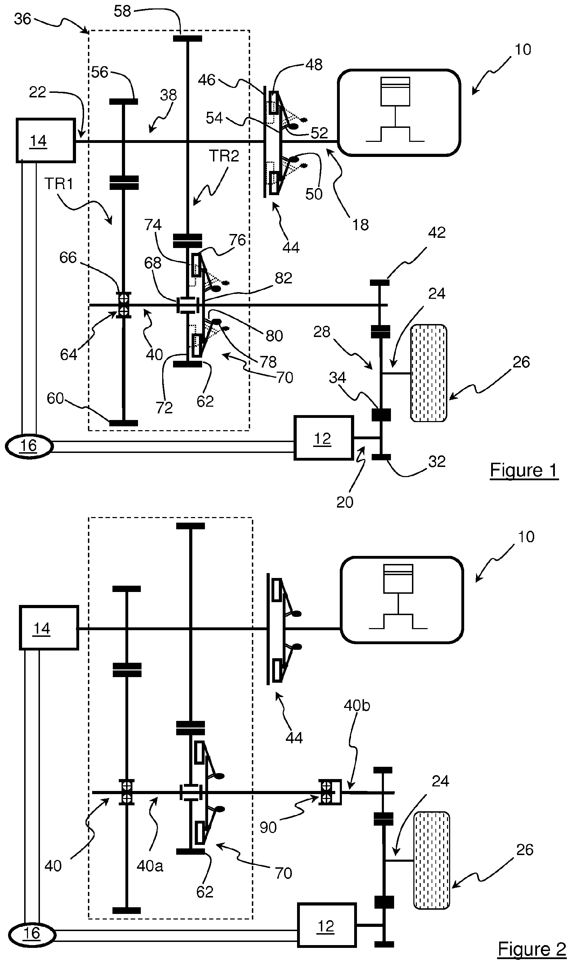

Comme illustré sur la figure 1, le système d'entraînement en déplacement du véhicule hybride comprend un moteur thermique 10, notamment un moteur à combustion interne, et deux machines électriques, une machine électrique principale 12 et une machine électrique auxiliaire 14, pouvant fonctionner toutes deux en mode moteur électrique ou en mode génératrice d'énergie en étant reliées à des accumulateurs électriques 16 (ou batteries).

Le moteur thermique 10 comprend un arbre d'entraînement 18 issu d'un prolongement du vilebrequin et qui est commandé en rotation par ce moteur. Les machines électriques 12, 14 comprennent chacune un arbre d'entraînement 20, 22 formé par le rotor de ces machines.

Ce système comprend également un arbre d'essieu 24 qui entraîne les roues 26 du véhicule, directement ou par l'intermédiaire d'un pont différentiel.

Cet arbre d'essieu est relié par une voie multiplicatrice de transmission de mouvement 28 au rotor 20 de la machine électrique principale 12. A titre d'exemple, cette voie comprend un train d'engrenage avec une roue dentée 32 portée de manière fixe par le rotor 20 et qui égrène avec une autre roue dentée 34 de diamètre différent montée sur l'arbre d'essieu 24.

Bien entendu, cette voie de transmission peut comporter tous autres éléments assurant la transmission de mouvement de rotation entre le rotor et l'arbre d'essieu, comme des poulies reliées par une courroie.

Ce système comprend aussi un dispositif de transmission de vitesse 36, désigné dans la suite de la description en tant que boîte de vitesses, qui est disposé entre l'arbre 18 du moteur à combustion interne et l'arbre d'essieu 24.

Cette boîte de vitesse comprend un arbre premier 38 placé dans le prolongement de l'arbre de moteur 18 et un arbre secondaire 40 situé sensiblement parallèlement à l'arbre premier et solidaire en rotation de l'arbre d'essieu 24 au travers d'une voie de transmission. Cette voie comprend un train d'engrenage formé par une roue fixe 42 portée par l'arbre secondaire 40 et qui engrène avec la roue dentée 34 de l'arbre d'essieu 24.

Bien entendu, cette voie de transmission peut comporter tous autres éléments assurant la transmission de mouvement de rotation entre l'arbre secondaire 40 et l'arbre d'essieu, comme des poulies et une courroie.

Comme mieux visible sur la figure 1, l'arbre premier 38 est relié à l'arbre 18 du moteur 10 au travers d'un accouplement débrayable 44.

A titre d'exemple, cet accouplement est un embrayage centrifuge dont le plateau de réaction 46 est porté fixement par une extrémité de l'arbre premier et dont le plateau de friction 48, contrôlé en déplacement axial par des masselottes 50 et des ressorts de rappel 52, est porté par un plateau 54 relié fixement à l'extrémité libre de l'arbre de moteur 18. De ce fait, sous l'impulsion de la rotation de cet arbre de moteur, le plateau de friction 48 est déplacé en translation axiale sous l'effet du mouvement centrifuge des masselottes pour être relié au plateau de réaction 46 par contact avec ce dernier.

L'arbre premier porte fixement en translation et en rotation au moins deux roues dentées de diamètres différents, ici une roue dentée de petit diamètre 56 située au voisinage de l'extrémité libre de l'arbre premier et une roue dentée 58 de plus grand diamètre que la roue 56 placée du côté du plateau de réaction. Pour des raisons de simplification dans la suite de la description, ces roues dentées sont dénommées roues dentées premières.

Ces roues dentées premières engrènent avec des roues dentées de différents diamètres portées par l'arbre secondaire 40 solidaire en rotation avec l'arbre d'essieu 24.

Ainsi, une roue dentée de grand diamètre 60 coopère avec la petite roue dentée 56 et une roue dentée de petit diamètre 62 engrène avec la grande roue dentée première 58. De même, pour des raisons de simplification, ces roues dentées 60 et 62 sont dénommées roues dentées deuxièmes.

Il est formé deux trains d'engrenage, un premier TR1 avec les roues dentées 56, 60 et un deuxième TR2 avec les roues dentées 58, 62 chacun de ces trains ayant des rapports de vitesse différents R1, R2.

La roue dentée deuxième de grand diamètre 60 est placée sur l'arbre secondaire 40 en y interposant un accouplement unidirectionnel, comme une roue libre 64, entre le palier 66 de cette roue dentée et cet arbre.

La roue dentée deuxième de petit diamètre 62 est montée folle en rotation sur l'arbre 40 en y étant immobilisée en translation axiale par des butées fixes 68.

Cette roue dentée peut être solidarisée en rotation avec cet arbre par l'intermédiaire d'un accouplement débrayable 70.

A titre d'exemple, cet accouplement est un accouplement centrifuge semblable à celui placé entre l'arbre de moteur 18 et l'arbre premier 38 de la boîte de vitesse 36.

Ainsi, cet accouplement comprend une surface de liaison 72 formée par une partie du voile 74 de la roue dentée 62 et un plateau de friction 76 en regard de cette surface de liaison. Ce plateau de friction est contrôlé en déplacement axial par un ensemble de masselottes 78 et de ressorts 80 qui sont portés par un plateau 82 relié fixement à l'arbre secondaire 40. Par cela, lors de la rotation de l'arbre 40 et sous l'effet du mouvement centrifuge des masselottes, le plateau de friction est déplacé en translation axiale en direction du voile 74 jusqu'a être au contact avec la surface 72. Ceci permet donc d'établir ainsi une liaison à rotation entre l'arbre 40 et la roue dentée 62.

Comme mieux visible sur la figure 1, ce système d'entraînement comprend aussi une disposition selon laquelle la machine électrique auxiliaire 14 est reliée à l'arbre primaire 38 en y étant placée en bout d'arbre de telle sorte que le rotor 22 de cette machine soit solidaire en rotation avec cet arbre primaire.

Il va être maintenant décrit les différentes configurations de fonctionnement.

Dans une première étape, il est fait mention du mode électrique de déplacement du véhicule hybride où seule la machine électrique principale 12 est utilisée en tant que moteur d'entraînement du véhicule.

Dans ce mode et en se référant à la figure 1, les accouplements 44 et 70 sont en position débrayée, le moteur 14 n'est pas alimenté électriquement, et le moteur électrique principal 12 est alimenté par les batteries 16 en générant la rotation du rotor 20.

Ce rotor transmet son mouvement de rotation à l'arbre d'essieu 24 par les roues dentées 32, 34, et à l'arbre secondaire 40, par les roues dentées 32, 34 et 42.

La rotation de l'arbre d'essieu est transmise directement ou indirectement aux roues 26 du véhicule pour réaliser le déplacement de ce véhicule.

Simultanément, la rotation de l'arbre secondaire 40 entraîne en rotation l'embrayage centrifuge 70 qui reste en position débrayé, jusqu'à une vitesse de rotation seuil Nr de cet arbre, vitesse au delà de laquelle l'embrayage 70 est actif. Par cela, la roue dentée 62 reste folle en rotation sur cet arbre sans entraîner la grande roue dentée première 58.

Ceci s'applique lorsque le moteur électrique est actionné avec un premier sens de rotation du rotor 20 pour entraîner le véhicule en marche avant.

Dans cette configuration, la roue dentée 60 n'est pas entraînée en rotation par la roue libre 64, qui est dans ce cas dans le sens glissant. Ainsi, toutes les roues dentées sont à l'arrêt.

Pour la marche arrière, le rotor 20 du moteur électrique principal 12 est commandé en rotation dans un sens inverse avec une vitesse de rotation inférieure à la valeur seuil Nr et les accouplements 44 et 70 restent en position débrayée.

La roue dentée deuxième de grand diamètre 60 est alors entraînée en rotation par la roue libre 64 qui lui transmet le mouvement de rotation de l'arbre secondaire 40. Ce mouvement de rotation est transmis à l'arbre premier 38 par engrènement de la roue dentée 60 avec la petite roue dentée 56. La rotation de l'arbre 38 entraîne alors la rotation du rotor 22 de la machine électrique auxiliaire 14 qui peut remplir une fonction de génératrice de courant pour recharger les batteries 16. Cette rotation de l'arbre 38 entraîne également en rotation la grande roue dentée 58 qui engrène avec la roue dentée 62, qui est montée folle en rotation sur l'arbre 36.

De plus, compte tenu de la position débrayée de l'embrayage centrifuge 44, la rotation de l'arbre premier 38 n'est pas retransmise à l'arbre d'entraînement 18 du moteur à combustion interne.

En revenant à la configuration pour l'entraînement en marche avant du véhicule avec le rotor 20 tournant dans le premier sens de rotation, dès que la vitesse de rotation de l'arbre secondaire 40 dépasse la valeur seuil Nr, l'embrayage centrifuge 70 est opérationnel en reliant à rotation l'arbre secondaire 40 à la roue dentée de petit diamètre 62.

Dans cette configuration, la roue dentée 62 engrène avec la grande roue dentée 58 qui entraîne en rotation l'arbre premier 38.

La rotation de cet arbre est ensuite transmise à la roue dentée 56 qui engrène avec la grande roue dentée 60 ainsi qu'au rotor 22 de la machine électrique auxiliaire 14 qui peut être utilisée dans cette configuration comme génératrice de courant pour recharger les batteries 16.

Compte tenu du différentiel de vitesses de rotation entre l'arbre secondaire 40 et la roue dentée 60 provenant des rapports différents R1 et R2 entre les trains d'engrenages TR1 et TR2 ainsi que par la présence de la roue libre 64, l'arbre 40 n'est pas entraîné en rotation par la roue 60. Cela provient du fait que la vitesse de rotation de l'arbre secondaire 40 est supérieure à la vitesse de rotation de la grande roue dentée 60.

Ainsi, il est possible de déplacer le véhicule, soit en marche avant sur toute la plage d'utilisation du moteur électrique, soit en en marche arrière sur une plage d'utilisation de ce moteur allant d'une vitesse de rotation supérieur à 0 jusqu'à une vitesse de rotation de l'arbre secondaire 40 inférieure à la valeur seuil Nr tout en ayant la possibilité d'utiliser utilisant la machine électrique auxiliaire 14 en tant que générateur pour recharger les batterie et prolonger ainsi l'autonomie du véhicule hybride.

De plus, lors des phases de décélération et/ou de freinage du véhicule, la récupération d'énergie électrique est maximisée. La machine électrique 12 est utilisée également en tant que génératrice de courant pour recharger les batteries 18.

Dans une autre configuration en mode électrique, les deux machines électriques 12 et 14 sont utilisées en tant que moteurs électriques pour entraîner le véhicule.

Dans ce mode, les accouplements 44 et 70 sont en position débrayée et les moteurs 12 et 14 sont alimentés électriquement par les batteries 16 en générant la rotation des rotors 20 et 22.

Comme précédemment décrit, le moteur 12 permet d'entraîner simultanément les roues 26 du véhicule pour son déplacement, et l'arbre secondaire 40 avec l'embrayage centrifuge 70 qui reste en position débrayée jusqu'à une vitesse de rotation seuil Nr.

Le moteur auxiliaire 14 entraîne en rotation les roues 56 et 58 portées par l'arbre premier 38. La rotation de ces roues est ensuite transmise aux roues 60 et 62.

Comme la roue 60 est portée par l'arbre 40 au travers de la roue libre 64 et compte tenu du différentiel de vitesses de rotation entre l'arbre secondaire 40 et la roue dentée 60, la roue libre est dans le sens bloquant. L'arbre 40 est alors entraîné en rotation par la roue 60 jusqu'à vitesse de rotation seuil Nr.

Ainsi le véhicule est entraîné en déplacement par les deux moteurs électriques, par le moteur 12 au travers de son rotor 20 et par le moteur 14 par la voie de transmission comprenant le rotor 22, le train d'engrenage TR1 et l'arbre secondaire 40.

Dès que la vitesse de rotation de l'arbre secondaire 40 dépasse la valeur seuil Nr, l'embrayage centrifuge 70 est opérationnel en reliant à rotation l'arbre secondaire 40 à la roue dentée de petit diamètre 62.

Par cela, la roue dentée 62 engrène avec la grande roue dentée 58 et la roue dentée 56 engrène avec la roue dentée 60.

Compte tenu du différentiel de vitesses de rotation entre l'arbre secondaire 40 et la roue dentée 60 ainsi que par la présence de la roue libre 64, l'arbre 40 n'est plus solidaire en rotation avec la roue 60.

La rotation du rotor 22 du moteur électrique 14 est ainsi transmise à l'arbre secondaire 40 au travers de la roue dentée 58 et de la roue dentée 62 rendue solidaire avec l'arbre 40 par l'embrayage 70.

Le véhicule est ainsi entraîné en déplacement par le moteur 12, au travers de son rotor 20, et par le moteur 14 grâce à la voie de transmission comprenant le rotor 22, le train d'engrenage TR2 et l'arbre secondaire 40.

Ceci permet d'améliorer notamment l'agrément de conduite du véhicule tout en limitant la puissance des machines électriques 12 et 14.

Dans le mode thermique de déplacement du véhicule hybride qui va être maintenant décrit, le moteur à combustion interne 10 est en fonctionnement et est utilisé en tant que moteur d'entraînement du véhicule.

A l'état de repos, aucun des deux embrayages centrifuges 44 et 70 n'est opérationnel et l'arbre 18 est en rotation.

Dès que la vitesse de rotation Nv de l'arbre de moteur 18 atteint une valeur seuil, l'embrayage centrifuge 44 est opérationnel en reliant cinématiquement l'arbre 18 à l'arbre premier 38 de la boîte de vitesse 36.

Les roues dentées 56 et 58 sont alors entraînées en rotation à la même vitesse que l'arbre 18.

La petite roue dentée 56 engrène donc avec la roue dentée 60 qui entraîne en rotation, au travers de la roue libre 64, l'arbre secondaire 40 et l'arbre d'essieu 24 au travers des roues dentées 42 et 34 ainsi que le rotor 20 de la machine électrique principale 12 par les roues dentées 42, 34 et 32.

La grande roue dentée 58 coopère à engrènement avec la roue dentée de petit diamètre 62.

Si la vitesse de l'arbre secondaire 40, entraîné en rotation par le train d'engrenage TR1, est inférieure à la vitesse Nr précédemment mentionnée, l'accouplement centrifuge 70 reste en position débrayée. Par cela, la roue dentée de petit diamètre 62 reste folle sur l'arbre 40 et la rotation par engrènement avec la grande roue dentée 58 n'a aucun effet sur cet arbre.

Dans cette configuration, le rotor 20 de la machine électrique principale 12 est entraîné en rotation par les roues dentées 42, 34 et 32 alors que le rotor 22 de la machine électrique auxiliaire 14 est entraîné en rotation par l'arbre primaire 38.

Ainsi les deux machines électriques peuvent être utilisées en tant que génératrice pour recharger les batteries 16 ou en tant que moteurs électriques pour assister le moteur thermique.

Dés que la vitesse de rotation de l'arbre 40 dépasse la valeur seuil Nr, l'accouplement centrifuge 70 est actif en reliant la roue dentée 62 à cet arbre.

Suite à cela, l'arbre secondaire 40 ainsi que l'arbre d'essieu 24 sont entraînés à une autre vitesse de rotation par le train d'engrenage TR2.

En effet, le train d'engrenage TR1 des roues dentées 56 et 60 n'a aucune action sur l'arbre 40 car, compte tenu du différentiel de vitesse de rotation entre la roue dentée 60 et l'arbre secondaire 40 entraîné par la roue dentée 62 ainsi que de la présence de la roue libre 64, l'arbre 40 n'est pas entraîné en rotation par la roue dentée 60. Cela puisque la vitesse de rotation de l'arbre secondaire est supérieure à la vitesse de la grande roue dentée 60.

Dans cette autre configuration, le véhicule est donc entraîné en déplacement selon un deuxième rapport de vitesse provenant du train d'engrenage des roues dentées 58, 62.

Comme précédemment mentionné, les deux machines électriques peuvent être utilisée en tant que génératrice pour recharger les batteries 16 puisque le rotor 20 de la machine électrique principale 12 est entraînée en rotation par les roues dentées 42, 34 et 32 et le rotor 22 de la machine électrique auxiliaire 14 est entraînée en rotation par l'arbre primaire 38.

De même, ces machines électriques peuvent être utilisées pour récupérer, en totalité ou en partie de l'énergie, soit lors des phases de décélération du véhicule soit en phase de freinage, en utilisant ces machines en tant que génératrice pour les batteries.

Il peut être noté que, dans le mode thermique d'entraînement du véhicule, il peut être combiné l'utilisation du moteur thermique avec celle de l'une et/ou l'autre des machines électriques, les puissances s'accumulant pour entraîner le véhicule.

La variante de la figure 2 se distingue de la figure 1 par le fait que l'arbre secondaire comprend deux demi-arbres 40a et 40b coaxiaux l'un avec l'autre en étant reliés par un accouplement unidirectionnel, comme une roue libre 90.

Cette roue libre est avantageusement placée entre la roue dentée 62 et l'embrayage centrifuge 70.

Dans la configuration de fonctionnement en mode électrique pour le déplacement du véhicule hybride en marche avant, seule la machine électrique principale 12 est utilisée en tant que moteur d'entraînement du véhicule.

Dans ce mode, le moteur électrique principal 12 est alimenté par les batteries 16 en générant la rotation du rotor 20 dans un premier sens de rotation. Cette rotation entraîne la rotation de l'arbre d'essieu 24 par les roues dentées 32 et 34 et la rotation du demi-arbre 40b par les roues dentées 32, 34 42.

Dans cette configuration, l'autre demi-arbre 40a n'est pas entraîné en rotation par la roue libre 90, qui est dans ce cas dans le sens glissant.

Grâce à cela, l'arbre d'essieu 24 peut être entraîné sur toute la plage de fonctionnement du moteur électrique 12 et le demi-arbre 40b peut dépasser la vitesse seuil Nr sans que cela ait une répercussion sur l'actionnement de l'embrayage centrifuge 70.

De plus, le moteur électrique principal 12 n'entraîne qu'un nombre restreint de pièces et la puissance ainsi rendue disponible peut être utilisée pour l'entraînement du véhicule.

Dans un autre mode de fonctionnement, les deux machines électriques peuvent être utilisées pour le déplacement du véhicule, seules ou en association avec le moteur thermique comme cela a été décrit.

Comme pour l'exemple de la figure 1, le rotor 20 du moteur électrique principal 12 est commandé en rotation dans un sens inverse, pour la marche arrière, avec une vitesse de rotation inférieure à la valeur seuil Nr. Dans ce cas, la roue libre 90 est dans le sens bloquant et les deux demi-arbres 40a et 40b sont reliés en rotation l'un avec l'autre. Le fonctionnement en marche arrière est de ce fait identique à celui de la figure 1.

Pour le mode thermique de déplacement du véhicule hybride, le moteur à combustion interne 10 est opérationnel et est utilisé en tant que moteur d'entraînement du véhicule avec le fonctionnement décrit en relation avec la figure 1.

Cela se réalise par le fait que, compte tenu du différentiel de vitesse entre les demi-arbres 40a et 40b, la roue libre 90 est dans le sens bloquant en transmettant la rotation du demi-arbre 40a au demi-arbre 40b.

De même, seule la machine électrique 12 peut être utilisée pour récupérer, en totalité ou en partie de l'énergie, soit lors des phases de décélération du véhicule soit en phase de freinage, en étant utilisée en tant que génératrice pour les batteries.

De plus, en phase de décélération du véhicule et quelque que soit le rapport de vitesse de la boîte de vitesse 36, le moteur thermique est déconnecté de l'essieu par l'ouverture de l'embrayage 44, ce qui permet de maximiser la récupération d'énergie.

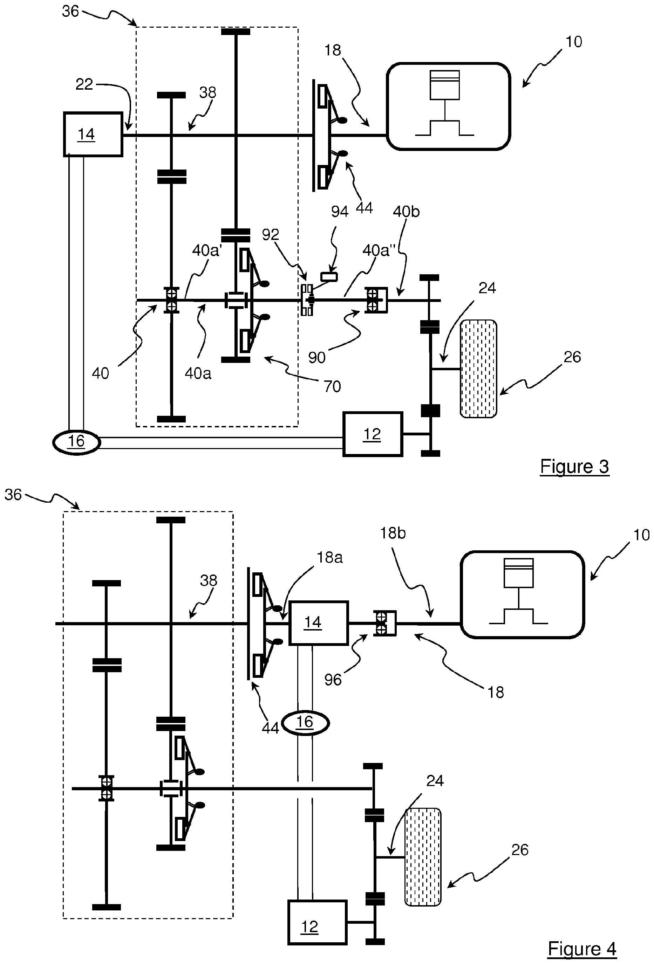

Dans le cas de la figure 3, qui est une variante issue de la figure et 2, il est prévu de séparer le demi-arbre 40a en deux parties 40a' et 40a" et de relier ces deux parties par un accouplement direct, de type crabot 92, de préférence à commande manuel 94. Comme mieux représenté sur la figure, ce crabot est avantageusement placé entre la roue libre 90 et l'embrayage centrifuge 70.

Le fonctionnement est de la variante de la figure 3 est identique à celui de la figure 2 lorsque le crabot 92 en position active.

Cette variante se distingue de celle de la figure 2 par le fait qu'elle permet de réaliser un mode "secours" lorsque les batteries sont vides car il autorise leur rechargement 16 à l'aide du moteur thermique 10 lorsque le véhicule est à l'arrêt.

Ceci se réalise en désactivant le crabot 92, ce qui interdit toute transmission de mouvement de rotation de l'arbre 40a' vers l'arbre 40a" et par conséquent vers les roues 26.

A l'arrêt, le moteur thermique est mis en route et lorsque l'embrayage 44 est opérationnel à partir de la vitesse de rotation Nv de l'arbre 38, ce dernier est entraîné en rotation par l'arbre 18 du moteur thermique. Cette rotation est ensuite transmise au rotor 22 de la machine électrique 14. Cette machine a alors une fonction de génératrice électrique qui va alimenter les batteries 16.

Cette variante permet aussi un fonctionnement de type "hybride série" pour l'entraînement du véhicule.

Plus précisément, comme mentionné plus haut, le moteur thermique 10 entraîne la machine 14 qui est utilisée en tant que génératrice. L'énergie électrique ainsi produite est dirigée vers la machine électrique 12 qui entraîne ainsi le véhicule en déplacement.

La variante de la figure 4 se distingue par le fait que l'arbre d'entraînement 18 du moteur 10 comprend deux demi-arbres 18a et 18b relié entre eux par un accouplement unidirectionnel, comme une roue libre 96.

Comme mieux visible sur cette figure, la roue libre 96 est placée entre le moteur thermique 10 et l'embrayage centrifuge 44, et le moteur électrique auxiliaire 14 est avantageusement placé entre cet embrayage et la roue libre 96 avec son rotor qui est confondu avec le demi-arbre 18a.

Pour ce qui est du mode électrique de déplacement du véhicule hybride de cette variante avec la machine électrique principale 12 utilisée en tant que moteur d'entraînement en marche avant ou en marche arrière du véhicule, le fonctionnement est identique à celui de la figure 1.

En fonctionnement avec les deux moteurs électriques alimentés électriquement, le moteur électrique 14 ne pourra être opérationnel pour l'entraînement du véhicule que lorsque la vitesse de l'arbre 18a dépassera la valeur seuil Nv. A partir de cette vitesse l'embrayage centrifuge 44 est opérationnel et l'arbre 18a est relié à l'arbre 380.

Dans cette configuration, la rotation de l'arbre 18a n'est pas transmise à l'arbre 18b par la présence de la roue libre 96 qui est dans le sens glissant.

Après la mise en route du moteur thermique, la roue libre sera dans le sens bloquant dés que la vitesse de rotation de l'arbre 18a sera supérieure à celle de l'arbre 18b.

A partir de cette configuration, le fonctionnement sera celui déjà décrit en relation avec la figure 1.

## Revendications

1. Système d'entraînement en déplacement d'un véhicule de type hybride avec un moteur thermique (10), notamment à combustion interne, une machine électrique (12) reliée à un arbre d'essieu (24) du véhicule et un dispositif de transmission (36) comportant un arbre premier de transmission (38) relié à l'arbre d'entraînement (18) du moteur thermique (10) au travers d'un accouplement débrayable (44) et portant au moins deux roues dentées premières (56, 58) coopérant avec au moins deux roues dentées deuxièmes (60, 62) portées par un arbre secondaire de transmission (40) relié à l'arbre d'essieu, l'arbre premier de transmission (36) étant relié à une machine électrique auxiliaire (14), **caractérisé en ce que** l'un des arbres de transmission (18, 40) comporte deux demi-arbres (18a, 18b; 40a, 40b) reliés entre eux par un accouplement unidirectionnel (90, 96).

2. Système d'entraînement selon la revendication 1, **caractérisé en ce que** l'arbre secondaire de transmission (40) comporte deux demi-arbres (40a, 40b) reliés entre eux par un accouplement unidirectionnel (90).

3. Système d'entraînement selon la revendication 2, **caractérisé en ce que** l'un (40a) des demi-arbres secondaires comporte deux parties (40a', 40a") reliées entre elles par un accouplement direct (92).

4. Système d'entraînement selon la revendication 3, **caractérisé en ce que** l'accouplement direct comprend un crabot (92).

5. Système d'entraînement selon la revendication 3 ou 4, **caractérisé en ce que** l'accouplement direct comprend un moyen de commande manuel (94).

6. Système d'entraînement selon la revendication 1, **caractérisé en ce que** l'arbre d'entraînement (18) du moteur thermique (10) comporte deux demi-arbres (18a, 18b) reliés entre eux par un accouplement unidirectionnel (96).

7. Système d'entraînement selon la revendication 6, **caractérisé en ce que** l'un (18a) des demi-arbres d'entraînement porte le moteur électrique auxiliaire (14).

8. Système d'entraînement selon la revendication 2 ou 6, **caractérisé en ce que** l'accouplement unidirectionnel comprend une roue libre (90, 96).

## Patentansprüche

1. Fahrantriebssystem eines Fahrzeugs des Hybrid-Typs mit einer Brennkraftmaschine (10), insbesondere mit innerer Verbrennung, einer elektrischen Maschine (12), die mit einer Achswelle (24) des Fahrzeugs verbunden ist, und einer Getriebevorrichtung (36), die eine erste Getriebewelle (38), die über eine lösbare Kupplung (44) mit der Antriebswelle (18) der Brennkraftmaschine (10) verbunden ist, aufweist und mindestens zwei erste Zahnräder (56, 58) trägt, die mit mindestens zwei zweiten Zahnrädern (60, 62) zusammenwirken, die von einer zweiten Getriebewelle (40) getragen sind, die mit der Achswelle verbunden ist, wobei die erste Getriebewelle (36) mit einer elektrischen Hilfsmaschine (14) verbunden ist, **dadurch gekennzeichnet, dass** eine der Getriebewellen (18, 40) zwei Halbwellen (18a, 18b; 40a, 40b) aufweist, die durch eine unidirektionale Kupplung (90, 96) miteinander verbunden sind.

2. Antriebssystem nach Anspruch 1, **dadurch gekennzeichnet, dass** die zweite Getriebewelle (40) zwei Halbwellen (40a, 40b) aufweist, die durch eine unidirektionale Kupplung (90) miteinander verbunden sind.

3. Antriebssystem nach Anspruch 2, **dadurch gekennzeichnet, dass** die eine (40a) der zwei Halbwellen zwei Teile (40a', 40a") aufweist, die durch eine direkte Kupplung (92) miteinander verbunden sind.

4. Antriebssystem nach Anspruch 3, **dadurch gekennzeichnet, dass** die direkte Kupplung eine Klauenkupplung (92) ist.

5. Antriebssystem nach Anspruch 3 oder 4, **dadurch gekennzeichnet, dass** die direkte Kupplung ein manuelles Steuermittel (94) aufweist.

6. Antriebssystem nach Anspruch 1, **dadurch gekennzeichnet, dass** die Antriebswelle (18) der Brennkraftmaschine (10) zwei Halbwellen (18a, 18b) aufweist, die durch eine unidirektionale Kupplung (96) miteinander verbunden sind.

7. Antriebssystem nach Anspruch 6, **dadurch gekennzeichnet, dass** die eine (18a) der zwei Antriebshalbwellen den elektrischen Hilfsmotor (14) trägt.

8. Antriebssystem nach Anspruch 2 oder 6, **dadurch gekennzeichnet, dass** die unidirektionale Kupplung ein Freilaufrad (90, 96) aufweist.

## Claims

1. A powertrain system for a hybrid type vehicle with a thermal engine (10), notably of internal-combustion type, an electric machine (12) connected to an axle shaft (24) of the vehicle and a transmission device (36) comprising a primary transmission shaft (38) connected to drive shaft (18) of thermal engine (10) through a disengageable coupling (44) and carrying at least two first gear wheels (56, 58) cooperating with at least two second gear wheels (60, 62) carried by a secondary transmission shaft (40) connected to the axle shaft, primary transmission shaft (38) being connected to an auxiliary electric machine (14), **characterized in that** one of transmission shafts (18, 40) comprises two half shafts (18a, 18b; 40a, 40b) connected to each other by a one-way coupling (90, 96).

2. A powertrain system as claimed in claim 1, **characterized in that** secondary transmission shaft (40) comprises two half shafts (40a, 40b) connected to each other by a one-way coupling (90).

3. A powertrain system as claimed in claim 2, **characterized in that** one (40a) of the secondary half shafts comprises two parts (40a', 40a") connected to each other by a direct coupling (92).

4. A powertrain system as claimed in claim 3, **characterized in that** the direct coupling comprises a claw (92).

5. A powertrain system as claimed in claim 3 or 4, **characterized in that** the direct coupling comprises a manual control means (94).

6. A powertrain system as claimed in claim 1, **characterized in that** shaft (18) driving thermal engine (10) comprises two half shafts (18a, 18b) connected to each other by a one-way coupling (96).

7. A powertrain system as claimed in claim 6, **characterized in that** one (18a) of the drive half shafts carries auxiliary electric motor (14).

8. A powertrain system as claimed in claim 2 or 6, **characterized in that** the one-way coupling comprises a free wheel (90, 96).
